# EUROPÄISCHE PATENTSCHRIFT

(11) **EP 0 679 902 B1**
(45) Veröffentlichungstag und Bekanntmachung des Hinweises auf die Patenterteilung: **20.08.2003**
(21) Anmeldenummer: 95104999.8
(22) Anmeldetag: 04.04.1995
(51) Int. Cl.: G01S 5/14

(54) **Verfahren zur Selektion von Signalen von Navigationssatelliten**
Method of selection of signals of navigation satellites
Procédé de sélection des signaux de satellites de navigation

(30) Priorität: 29.04.1994 DE 4415083
(43) Veröffentlichungstag der Anmeldung: 02.11.1995
(73) Patentinhaber: ROBERT BOSCH GMBH, 70442 Stuttgart (DE)
(72) Erfinder: Noetzel, Guenter, Dipl.-Ing., D-31199 Diekholzen (DE)

(56) Entgegenhaltungen:
- DE-A- 4 002 176
- DE-A- 4 142 403
- US-A- 4 899 285
- US-A- 4 949 268

## Beschreibung

Die Erfindung geht aus von einem Verfahren bzw. einem Empfangsgerät zur Selektion von empfangenen Signalen von Navigationssatelliten, beispielsweise der GPA-, GLONASS- oder ähnlicher Satellitensysteme nach der Gattung der nebengeordneten Ansprüche 1 und 6. Zur momentanen Positionsbestimmung werden dabei die Signale mehrerer Satelliten ausgewertet, die auf bestimmten vorgegebenen Bahnen die Erde umkreisen. Aufgrund von Laufzeitmessungen kann ein Empfänger die genaue Entfernung zum Satelliten bestimmen, dessen derzeitige Position im Empfänger bekannt ist (z.B. durch Angaben, die vom Satelliten an den Empfänger übertragen werden). Die Kenntnis der Position von drei Satelliten und des Abstandes zu ihnen genügt, um den Ort des Empfängers eindeutig bis auf wenige Meter genau zu bestimmen. Befindet sich der Empfänger beispielsweise in einem Kraftfahrzeug, das den Empfangsbereich durch Fahrzeugteile teilweise abgeschattet, dann können nicht alle zur Positionsbestimmung geeignet erscheinende Satelliten empfangen werden. Andererseits können durch Reflexionen an Häuserwänden oder Bergen Satellitensignale empfangen werden, die eine falsche Position des Satelliten vortäuschen. Der Empfänger kann diese unterschiedlichen Signale von sich aus jedoch nicht unterscheiden, so daß es teilweise zu Fehlbestimmungen der Position kommt. Derartige Fehlbestimmungen sind unerwünscht, da sie die Zuverlässigkeit des Gerätes stark beeinträchtigen können.

Aus DE-A-40 01 176 ist eine GPS-Navigationseinrichtung für ein Fahrzeug bekannt, die mindestens zwei GPS-Antennen zum Empfang der Signale verschiedener GPS-Satelliten aufweist. Bei dieser Vorrichtung wird eine aktuelle Fahrtrichtung ermittelt und aufgrund der jeweils aktuellen, bekannten Satellitenstellungen, der Fahrtrichtung des Fahrzeugs, des Aufbaus des Fahrzeugs und dem Anbringungsort der GPS-Antennen für mindestens eine der Antennen errechnet, von welchem Satelliten diese Antenne Signale zum Berechnen der Position des Fahrzeugs empfangen kann. Für diese Berechnung wird ein fest vorgegebener und gespeicherter Sichtbereich der Antennen bezüglich einer ermittelten Fahrtrichtung vorausgesetzt. Auf diese Weise wird festgelegt, von welcher Antenne die Signale welches Satelliten zur Positionsbestimmung genutzt werden sollen.

US-A-4 949 268 lehrt ein Navigationsgerät für Kraftfahrzeuge, bei dem infolge z. B. einer Bebauung in der Umgebung des Fahrzeugstandortes Satellitensignale unter Umständen abgeschattet und somit nicht empfangen werden können. Die beschriebene Anordnung ist dazu ausgelegt, mittels in einer Karte abgelegter topographischer Daten, die auch eine Bebauung berücksichtigen, diejenigen Satelliten vorab zu bestimmen, die unter den gegebenen Umständen am Fahrzeugstandort empfangbar sind.

### Vorteile der Erfindung

Das erfindungsgemäße Verfahren beziehungsweise das Empfangsgerät nach den nebengeordneten Ansprüchen 1 und 6 hat demgegenüber den Vorteil, daß tatsächlich nur die Signale ausgewertet werden, deren Satelliten im Sichtbereich der Antenne liegen und deren Signale daher direkt auf die Antenne fallen. Die reflektierten Signale von Satelliten, die nicht im Sichtbereich der Antenne liegen, werden unterdrückt. Dadurch wird vorteilhaft die Zuverlässigkeit der Positionsbestimmung erhöht.

Durch die in den abhängigen Ansprüchen aufgeführten Maßnahmen sind vorteilhafte Weiterbildungen und Verbesserungen des im Anspruch 1 angegebenen Verfahrens beziehungsweise des Empfangsgeräts nach Anspruch 6 möglich. Besonders vorteilhaft ist, daß durch die wiederholte Bestimmung der Größe oder der Weite des Sichtbereichs das Erkennungsfeld für die Satelliten optimiert wird, so daß je nach Fahrtrichtung und Zeitpunkt alle Satelliten, die im Sichtbereich der Antenne liegen und für die Positionsbestimmung genutzt werden können.

Eine Optimierung des Sichtbereichs ergibt sich dadurch, daß bei wiederholten Messungen ein neu ermittelter Sichtbereich mit vorherigem, gespeicherten Sichtbereich verglichen wird, so daß durch mehrere Meßversuche der größtmögliche Sichtbereich in Abhängigkeit von der Fahrtrichtung ermittelt wird.

Da die empfangbaren Satelliten durch ihre Umlaufbahnen festgelegt sind, können - je nach Fahrtrichtung - zu einem bestimmten Zeitpunkt nur ganz bestimmte Satelliten empfangen werden. Zur Bestimmung der Fahrtrichtung des Fahrzeugs werden daher vorteilhaft Fahrzeugsensoren oder ein entsprechender Kompass verwendet. Es ist aber auch möglich, die Fahrtrichtung aus den Satellitensignalen selbst herzuleiten, z.B. durch Auswertung der Doppler-Verschiebung der Trägerfrequenz.

Für eine kartengestützte Navigation wird vorteilhaft ein GPS-Empfänger verwendet, um die Position des Fahrzeug-Navigationsgeräts zu kontrollieren oder gegebenenfalls zu korrigieren.

Ein vorteilhaft Einbauort für die Antenne eines GPS-Empfängers ist beispielsweise innerhalb des Fahrzeugs im Bereich der Heck- oder Frontscheibe gegeben. Auch kann die Antenne verdeckt unter der Hutablage oder dem Armaturenbrett angeordnet sein, so daß sie nicht sichtbar ist und daher auch vor Beschädigungen geschützt ist.

### Zeichnung

Ein Ausführungsbeispiel der Erfindung ist in der Zeichnung dargestellt und in der Beschreibung näher erläutert. Es zeigen Figur 1 eine schematische Anordnung der Antenne in einem Fahrzeug, Figur 2 zeigt eine Projektion eines Sichtbereichs und Figur 3 zeigt ein Blockschaltbild eines GPS-Empfängers.

### Beschreibung des Ausführungsbeispiels

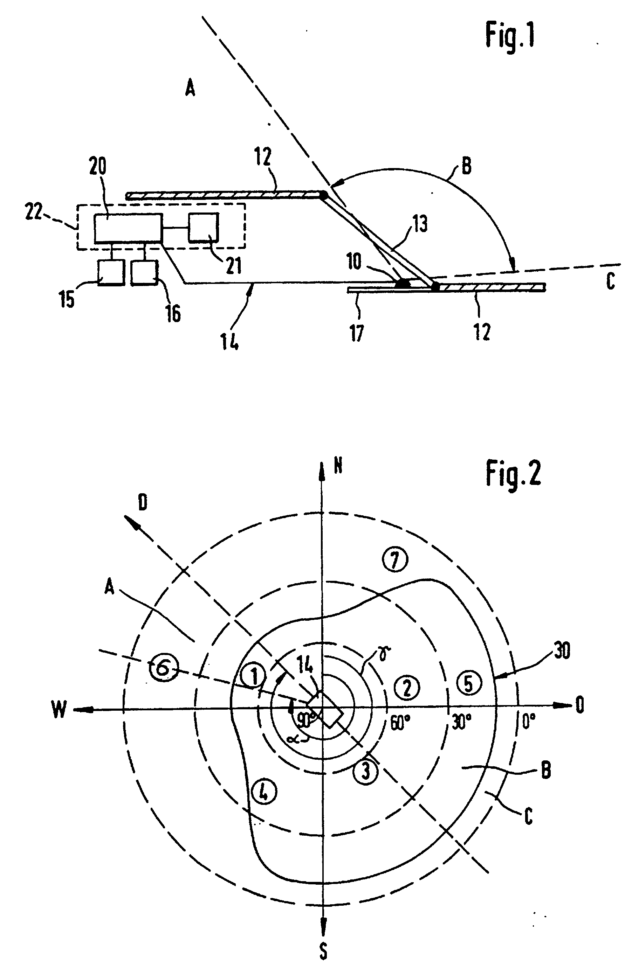

Figur 1 zeigt schematisch die Anordnung einer Antenne 10 in einem Fahrzeug 14. Im Schnittbild der Figur 1 sind die Fahrzeugteile 12 als Dach und Heckklappe dargestellt. Des weiteren ist eine Heckscheibe 13 erkennbar, hinter der beispielsweise auf einer Hutablage 17 eine Antenne 10 eines GPS-Empfängers 22 angeordnet ist. Die Antenne 10 wird teilweise durch die Fahrzeugteile 12 abgeschattet, so daß sich durch die Heckscheibe oder auch Frontscheibe 13 ein beschränkter Sichtbereich B ergibt. Signale aus den anschließenden Bereichen A, C können von der Antenne 10 nicht empfangen werden, da die Fahrzeugteile 12 die Signale abschirmen. Die Antenne 10 kann somit die Signale der GPS-Satelliten empfangen, die im Sichtbereich B liegen. In diesen Sichtbereich B fallen natürlich auch solche Signale ein, die von außerhalb dieses Sichtbereichs befindlichen Satelliten gesendet werden, deren Signale aber an Hauswänden, Bergen u. ä. reflektiert werden. Diese Signale verfälschen die Positionsbestimmung und sind daher nicht erwünscht.

In Figur 1 ist schematisch noch ein GPS-Empfänger 22 dargestellt, der eine Steuerung 20, sowie eine entsprechende Datenausgabe 21 aufweist. Die Steuerung ist vorzugsweise mit einem oder mehreren Radsensoren 15 oder einem Kompass 16 verbunden. Die Radsensoren 15 oder der Kompass 16 können somit die Fahrtrichtung oder die Nordrichtung des Fahrzeugs in den GPS-Empfänger 22 eingeben. Der GPS-Empfänger 22 ist per se bekannt und muß daher nicht näher beschrieben werden. Anstelle der Radsensoren 15 können auch geeignete Trägheitssensoren (Gyrometer) verwendet werden. Auch läßt sich die Fahrtrichtung aus den Satellitensignalen durch Messung der Doppler-Verschiebung oder der Trägerphase ermitteln.

Figur 2 zeigt die Projektion eines Sichtbereich B, der durch die Kurve 30 begrenzt ist. Die Kurve 30 ergibt den Sichtbereich B für die gewählte Anordnung der Antenne 10 hinter der Scheibe 13. Beispielsweise befindet sich das Fahrzeug 14 in der Mitte des Achsenkreuzes N, O, S, W und fährt in Fahrtrichtung D. Um das Fahrzeug sind gestrichelt Kreise dargestellt, die den Elevationswinkeln 30°, 60° und 90° entsprechen. Des weiteren sind im Achsenkreuz schematisch Navigationssatelliten 1 bis 7 angeordnet, die um die Erde kreisen. Die Satelliten haben Elevationswinkel zwischen 30° und 90°. Beispielsweise befinden sich die Satelliten 1 und 3 in West-Nord-West- bzw. Süd-Ost-Richtung mit 60°-Elevation, der Satellit 2 und 4 hat eine Elevation von 40°bis 50° und die Satelliten 5, 6 und 7 stehen tief mit einer Elevation unter 30°. Innerhalb des Sichtbereichs B können somit maximal die Satelliten 1 bis 5 direkt empfangen werden, währen die Satelliten 6 und 7 nicht oder nur indirekt empfangen werden können. Von den empfangbaren Satelliten 1 bis 5 ist die Empfangsqualität noch abhängig von der relativen Position zur Empfangsantenne 10, so daß in der Regel nicht jeder dieser fünf Satelliten zur Auswertung seiner Signale verwendet wird.

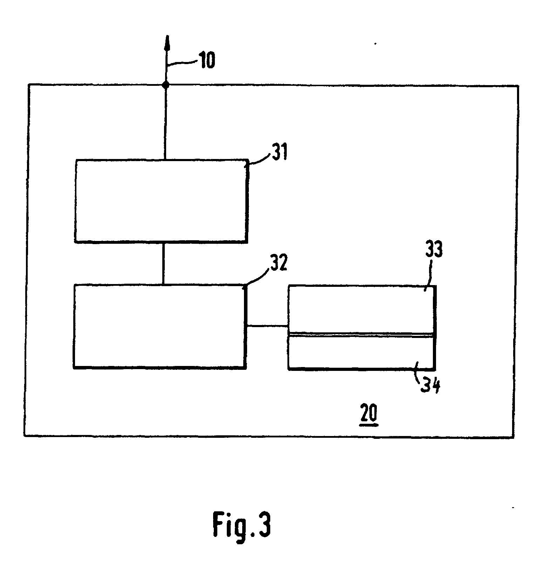

Figur 3 zeigt schematisch die Steuerung 20 eines GPS-Empfängers 22. An diesem Empfänger ist die Antenne 10 mit einem Decoder 31 verbunden, der die decodierten Signale an eine Auswertung 32 weiterleitet. Die Auswertung 32 hat einen ersten Speicherbereich 33, in dem Codenamen der empfangbaren Satelliten sowie deren Umlaufbahnen gespeichert sind. Des weiteren ist die Auswertung 32 mit einem zweiten Speicherbereich 34 verbunden, in dem fahrtrichtungsabhängige Sichtbereiche B der Antenne 10 gespeichert sind.

Im folgenden wird anhand des Ausführungsbeispiels das Verfahren beziehungsweise das entsprechende Empfangsgerät zur Durchführung der Selektion von direkt einfallenden und reflektierten beziehungsweise indirekt einfallenden Signalen näher erläutert. Es wird angenommen, daß bezüglich der Figur 2 das Fahrzeug 14 sich im Koordinatenmittelpunkt befindet und entsprechend dem gestrichelten Pfeil in die Fahrtrichtung D fährt. Dem Sichtbereich B ist somit entnehmbar, daß das Fahrzeuggerät die Satelliten 1 bis 5 direkt empfängt, da diese Satelliten im Sichtbereich zur Antenne 10 liegen. Es wird weiter angenommen, daß auch die Signale in den Bereichen A oder C von den Satelliten 6 und 7 empfangen werden, da deren Signale durch Reflektion in den Sichtbereich B reflektiert werden. Der GPS-Empfänger 22 kann von sich aus nicht unterscheiden, ob die Signale des Satelliten 1 bis 7 direkt oder indirekt einfallen. Zur Ermittlung der direkt einfallenden Satellitensignale wird zunächst die Fahrtrichtung D des Fahrzeugs 14 berechnet. Aufgrund der Fahrtrichtung D entnimmt nun die Auswertung 32 dem zweiten Speicher 34 die entsprechenden Werte für den Sichtbereich B, die zuvor beispielsweise empirisch ermittelt und in Abhängigkeit von der Fahrtrichtung abgespeichert wurden. Im ersten Speicherbereich 33 sind die Namen und die Umlaufbahnen gespeichert, so daß zu einem bestimmten Zeitpunkt ermittelt werden kann, welche der gespeicherten Satelliten sich gerade im Sichtbereich B des Fahrzeugs befinden. Die Auswertung 32 stellt beispielsweise fest, daß die Satelliten 1 bis 5 sich gerade im Sichtbereich B befinden. Sie kann somit deren Signale gemeinsam oder teilweise zur Positionsbestimmung heranziehen. Die indirekt einfallenden Signale der Satelliten 6 und 7 werden dabei unterdrückt.

Ändert sich die Fahrtrichtung D des Fahrzeugs 14, dann ändert sich damit auch die Lage des Sichtbereichs B relativ zu den Satelliten. In dem neuen Sichtbereich können nunmehr gegebenenfalls andere Satelliten empfangen werden, so daß erneut von den empfangenen Signalen die direkt einfallenden Signale ausgewählt werden müssen.

Der Sichtbereich B ist durch die räumliche Anordnung der Antenne 10 im Fahrzeug 14 bestimmt. Er ergibt sich aus dem Volumen, das aus dem Höhenwinkel und dem weiten Winkel gebildet wird. Da im Grenzbereich zu den Fahrzeugteilen 12 das Satellitensignal durch Beugung und Reflexion abgelenkt werden kann, ist eine Optimierung des Sichtbereichs B vorgesehen. Prinzipiell kann der Sichtbereich empirisch für jede Fahrtrichtung ermittelt werden und die entsprechenden Werte in dem zweiten Speicher 34 abgelegt sein. Zur Optimierung ist es vorteilhaft, während einer Fahrt in die gleiche Richtung, möglichst in einem reflexionsarmen Gebiet, mehrere Empfangsmessungen der Satelliten durchzuführen. Dabei werden die Signale derjenigen Satelliten decodiert, die sich gerade im Sichtbereich B befinden. Bei einer Fahrt in die gleiche Richtung können diese Satelliten für eine gewisse Zeit empfangen werden. Indirekt einfallende Signale können dabei ausbleiben oder nur sehr schwach empfangen werden. Durch Vergleich mit vorher gespeicherten Messungen kann somit ein optimaler Bereich für den Empfangsbereich B festgelegt werden, der unter Umständen kleiner ist als der durch die Fahrzeugteile 12 begrenzte Bereich. Der so optimierte Sichtbereich B wird dann für die weitere Selektion der Satellitensignale verwendet.

In weiterer Ausgestaltung der Erfindung ist vorgesehen, daß der gesamte Empfangsbereich in Teilbereiche mit den Parametern Elevation und Winkel relativ zur Fahrtrichtung aufgeteilt wird. Jedem dieser Segmente wird eine Zählzelle zugeordnet. Wird ein Satellit nach seiner aktuellen Position und der aktuellen Fahrtrichtung in einem Segment erwartet, kann aber nicht empfangen werden, so wird die zugehörige Zählzelle herabgezählt, wird es aber erwartungsgemäß empfangen, so wird sie heraufgezählt. Die Zählerstände der einzelnen Segmente werden mit der Anzahl der in dem Teilbereich durchgeführten Zählungen in einen relativen Wert umgewandelt. Dann kann ein Schwellwert definiert werden (z.B. 75%), der eine Aussage darüber liefert, ob ein Segment im Sichtbereich oder außerhalb liegt. Anhand eines Beispiels wird dies näher erläutert. Der Satellit 6 hat gemäß Figur 2 den Richtungswinkel (Azimutwinkel) α ≈ 290° und den Elevationswinkel β₆ ≈ 15°. Das Fahrzeug 14 hat einen Fahrwinkel γ ≈ 315°, d.h. relativ zum Fahrzeug 14 beträgt der Azimutwinkel des Satelliten 6 etwa 280°-315° = -35° bzw. im positiven Wertebereich zwischen 0 und 360° ergibt sich der Winkel +325°. Di e relative Position des Satelliten 6 zur Fahrzeugantenne 10 ist daher 325°/15°. Der Empfangsbereich B ist in vorgegebene Teilbereiche eingeteilt. Da die Position 325°/15° jedoch in keinen Teilbereich fällt, wird ein Zählwert für jeden Teilbereich herabgezählt.

Der Satellit 5 hat dagegen die Koordinaten 80°/15° oder relativ zum Fahrzeug 80°-315° = -235° bzw. +125°. Die Position ist also 125°/15°. Sie liegt in einem Teilbereich, so daß beim Abfragen der Teilbereiche der Zähler für diesen Teilbereich heraufgesetzt wird. Bei wiederholten Messungen erhält man so eine Häufigkeitsverteilung. Wird dabei ein Satellit in einem Teilbereich häufiger als z.B. 75% gemessen, dann wird davon ausgegangen, daß dessen Signale direkt empfangen wurden. Im anderen Fall waren es vielleicht nur reflektierte Signale.

## Patentansprüche

1. Verfahren zur Ermittlung eines Sichtbereichs (B) einer durch Fahrzeugteile (12) teilweise abgeschatteten Fahrzeugantenne (10) für Navigationssatellitensignale in Abhängigkeit einer Fahrtrichtung (D) des Fahrzeugs (14), wobei die Antenne (10) mit einem Satelliten-Empfänger (22) verbunden ist, und
wobei aufgrund der Abschattung der Antenne (10) durch Fahrzeugteile (12) der Sichtbereich (B) der Antenne (10) eingeschränkt ist und die Antenne (10) sowohl in den Sichtbereich (B) direkt einfallende Signale, als auch reflektierte Signale empfängt,
wobei ein fahrtrichtungsabhängiger Sichtbereich gespeichert ist,
**dadurch gekennzeichnet,**
**dass** durch wiederholte Empfangsmessungen festgestellt wird, von welchen Satelliten Signale durch die Antenne empfangen werden können und
**dass** ein optimierter Sichtbereich (B) empirisch anhand der durch den Satelliten-Empfänger (22) decodierten Satellitensignale festgelegt und gespeichert wird.

2. Verfahren nach Anspruch 1, **dadurch gekennzeichnet,**
**daß** der Sichtbereich (B) in Teilbereiche aufgeteilt ist, daß die Häufigkeit der in einem Teilbereich empfangenen Signale gezählt wird und daß die Anzahl der gezählten Häufigkeitssignale als Maß für die direkt oder indirekt empfangenen Satellitensignale ausgewertet wird.

3. Verfahren nach einem der vorhergehenden Ansprüche, **dadurch gekennzeichnet, daß** die Fahrtrichtung (D) des Fahrzeugs (14) durch Fahrzeugsensoren (15), einem Trägheitssensor (Gyroskop), aus den Satellitensignalen und/oder einem Kompaß (16) bestimmt wird.

4. Verwendung des Verfahrens nach einem der Ansprüche 1-3 zur Selektion von Signalen von Navigationssatelliten, wobei von den empfangbaren Satellitensignalen nur diejenigen ausgewählt werden, deren zugehörige Satelliten in dem Sichtbereich (B) der Antenne (10) liegen.

5. Verwendung des Verfahrens nach Ansprüch 4 für eine Positonsbestimmung in einem Fahrzeugnavigationsgerät.

6. Empfangsgerät zur Ermittlung eines Sichtbereichs (B) einer durch Fahrzeugteile (12) teilweise abgeschatteten Fahrzeugantenne (10) für Navigationssatellitensignale in Abhängigkeit einer Fahrtrichtung (D) des Fahrzeugs (14), wobei die Antenne (10) mit einem Satelliten-Empfänger (22) verbunden ist, und
wobei aufgrund der Abschattung der Antenne (10) durch Fahrzeugteile (12) der Sichtbereich (B) der Antenne (10) eingeschränkt ist und die Antenne (10) sowohl in den Sichtbereich (B) direkt einfallende Signale, als auch reflektierte Signale empfängt,
wobei in einem Speicher (33, 34) ein fahrtrichtungsabhängiger Sichtbereich gespeichert ist,
**dadurch gekennzeichnet,**
**dass** Mittel (20) vorhanden sind, mit denen durch wiederholte Empfangsmessungen festgestellt wird, von welchen Satelliten Signale durch die Antenne empfangen werden können und
**dass** ein optimierter Sichtbereich (B) ermittelt und gespeichert wird, der empirisch anhand der durch den Satelliten-Empfänger (22) decodierten Satellitensignale festgelegt wird.

7. Empfangsgerät nach Anspruch 6, wobei die Antenne (10) vorzugsweise hinter einer Scheibe (13) des Fahrzeugs (14) angeordnet ist, wobei
a) der Speicher (33, 34) einen ersten Speicherbereich (33) aufweist, in dem Codenamen und Bahndaten aller empfangbaren Navigationssatelliten (1 bis 5) gespeichert sind,
b) ein zweiter Speicherbereich (34) vorgesehen ist, in dem Werte für den Sichtbereich (B) der Antenne (10) in Abhängigkeit von der Fahrtrichtung (D) des Fahrzeugs (14) gespeichert sind, wobei die Größe oder Weite des Sichtbereichs (B) wiederholt bestimmund abspeicherbar ist, und
c) eine Auswertung (32) vorgesehen ist, die aus den in dem ersten und zweiten Speicher bereich (33, 34) abgelegten Werten die Satelliten (1 bis 5) ermittelt, die im momentanen Sichtbereich (B) der Antenne (C) liegen.

8. Empfangsgerät nach Anspruch 7, **dadurch gekennzeichnet, dass** eine Änderung der Fahrtrichtung (D) durch Radsensoren (15) am Fahrzeug (14), einen Kompaß (16) und/oder durch einen Trägheitssensor bestimmbar ist.

9. Empfangsgerät nach Anspruch 7 oder 8, **dadurch gekennzeichnet, dass** die Antenne (10) hinter der Heckscheibe und/oder der Frontscheibe (13) des Fahrzeugs (14) angeordnet ist.

10. Empfangsgerät nach einem der Ansprüche 7 bis 9, **dadurch gekennzeichnet, dass** die Antenne (10) verdeckt unter der Hutablage und/oder dem Armaturenbrett des Fahrzeugs (14) angeordnet ist.

11. Empfangsgerät nach einem der Ansprüche 7 bis 10, **dadurch gekennzeichnet, dass** das Empfangsgerät (22) mit einem Fahrzeugnavigationsgerät elektrisch verbunden ist.

## Claims

1. Method for determining a visual range (B) of a vehicle antenna (10) for navigational satellite signals as a function of a direction (D) of travel of the vehicle (14), said vehicle antenna (10) being partially in the shadow of parts (12) of the vehicle, the antenna (10) being connected to a satellite receiver (22), and the visual range (B) of the antenna (10) being restricted as a result of the fact that the antenna (10) is in the shadow of parts (12) of the vehicle, and the antenna (10) receiving signals which occur directly in the visual range (B) as well as reflected signals, in which case a visual range which is dependent on the direction of travel is stored, **characterized in that** repeated reception measurements are used to determine from which satellites signals can be received by means of the antenna, and **in that** an optimized visual range (B) is defined and stored empirically by means of the satellite signals which are decoded by the satellite receiver (22).

2. Method according to Claim 1, **characterized in that** the visual range (B) is divided into partial ranges, **in that** the frequency of occurrence of the signals received in a partial range is counted, and **in that** the number of counted frequency-of-occurrence signals is evaluated as a measure of the satellite signals which are received directly or indirectly.

3. Method according to one of the preceding claims, **characterized in that** the direction (D) of travel of the vehicle (14) is determined by vehicle sensor (15), an inertia sensor (gyroscope), from the satellite signals and/or a compass (16).

4. Use of the method according to one of Claims 1 to 3 for selecting signals of navigation satellites, of the satellite signals that can be received only those being selected whose associated satellites lie in the visual range (B) of the antenna (10).

5. Use of the method according to Claim 4 for determining position in a vehicle navigation device.

6. Receiver for determining a visual range (B) of a vehicle antenna (10) for navigational satellite signals as a function of a direction (D) of travel of the vehicle (14), said vehicle antenna (10) being partially in the shadow of parts (12) of the vehicle, the antenna (10) being connected to a satellite receiver (22), and the visual range (B) of the antenna (10) being restricted as a result of the fact that the antenna (10) is in the shadow of parts (12) of the vehicle, and the antenna (10) receiving signals which occur directly in the visual range (B) as well as reflected signals, in which case a visual range which is dependent on the direction of travel is stored in a memory (33,34), **characterized in that** means (20) are present which are used to determine, by means of repeated reception measurements, from which satellites signals can be received by means of the antenna, and **in that** an optimized visual range (B), which is defined empirically using the satellite signals which are decoded by means of the satellite receiver (22), is determined and stored.

7. Receiver according to Claim 6, the antenna (10) preferably being arranged behind a window pane (13) of the vehicle (14),
a) the memory (33, 34) having a first memory area (33) in which code names and orbit data of all the receivable navigation satellites (1 to 5) are stored,
b) a second memory area (34) being provided in which values for the visual range (B) of the antenna (10) are stored as a function of the direction (D) of travel of the vehicle (14), the magnitude or width of the visual range (B) being capable of being determined and stored repeatedly, and
c) an evaluation (32) being provided which determines, from the values stored in the first and second memory area (33, 34), the satellites (1 to 5) which lie in the instantaneous visual range (B) of the antenna (C).

8. Receiver according to Claim 7, **characterized in that** a change in the direction (D) of travel can be determined by means of wheel sensors (15) on the vehicle (14), a compass (16) and/or by means of an inertia sensor.

9. Receiver according to Claim 7 or 8, **characterized in that** the antenna (10) is arranged behind the rear window and/or the windscreen (13) of the vehicle (14).

10. Receiver according to one of Claims 7 to 9, **characterized in that** the antenna (10) is arranged concealed under the parcel shelf and/or the dashboard of the vehicle (14).

11. Receiver according to one of Claims 7 to 10, **characterized in that** the receiver (22) is electrically connected to a vehicle navigation device.

## Revendications

1. Procédé pour déterminer la plage de réception (B) d'une antenne de véhicule (10) cachée partiellement par des parties du véhicule (12), pour les signaux de satellites de navigation suivant la direction de déplacement (D) du véhicule (14), l'antenne (10) étant reliée à un récepteur de satellite (22), l'ombre portée sur l'antenne (10) par les parties (12) du véhicule limitant la plage de réception (B) de l'antenne (10) qui reçoit à la fois les signaux incidents directs dans la plage de réception (B) et les signaux réfléchis, et
une plage de réception étant enregistrée en fonction de la direction de déplacement,
**caractérisé en ce que**
on détermine par des mesures de réception, répétées, les satellites dont les signaux peuvent être reçus par l'antenne, et
on fixe et on mémorise une plage de réception (B) optimisée, de manière empirique à l'aide des signaux satellites décodés par le récepteur de satellite (22).

2. Procédé selon la revendication 1,
**caractérisé en ce que**
la plage de réception (B) est divisée en plages partielles, on sélectionne la fréquence des signaux reçus dans une plage partielle, et on exploite le nombre de signaux de fréquence comptés comme mesures des signaux de satellites reçus directement ou indirectement.

3. Procédé selon l'une des revendications précédentes,
**caractérisé en ce qu'**
on détermine la direction de déplacement (D) du véhicule (14) par des capteurs de véhicule (15), un capteur inertiel (gyroscope) à partir des signaux des satellites et/ou par un compas (16).

4. Application du procédé selon l'une des revendications 1 à 3 pour sélectionner des signaux de satellites de navigation,
selon laquelle on sélectionne parmi les signaux de satellites reçus, seulement ceux des satellites faisant partie de la plage de réception (B) de l'antenne (10).

5. Application du procédé selon la revendication 4 pour déterminer la position dans un appareil de navigation de véhicule.

6. Récepteur pour déterminer une plage de réception (B) d'une antenne de véhicule (10) partiellement cachée par des parties du véhicule (12) pour des signaux de satellites de navigation, en fonction de la direction de déplacement (D) du véhicule (14), l'antenne (10) étant reliée à un récepteur de satellite (22), les parties du véhicule (12) qui cachent l'antenne (10) limitant la plage de réception (B) de l'antenne (10) qui reçoit à la fois les signaux incidents directs dans la plage de réception (B) et les signaux réfléchis, et
une plage de réception dépendant de la direction de déplacement étant enregistrée dans une mémoire (33, 34),
**caractérisé par**
des moyens (20) avec lesquels on détermine par des mesures de réception répétées, les satellites dont l'antenne peut recevoir les signaux et
on détermine et on met en mémoire une plage de réception (B) optimisée empiriquement à l'aide des signaux de satellites décodés par le récepteur de satellite (22).

7. Récepteur selon la revendication 6, l'antenne (10) étant installée de préférence derrière une vitre (13) du véhicule (14),
dans lequel
a) la mémoire (33, 34) comporte une première plage (33) dans laquelle sont enregistrés le nom de code et les données des bandes de tous les satellites de navigation (1-5) susceptibles d'être reçus,
b) une seconde plage de mémoire (34) dans laquelle on enregistre les valeurs de la plage de réception (B) de l'antenne (10) en fonction de la direction de déplacement (D) du véhicule (14), en déterminant de manière répétée et en enregistrant l'amplitude ou la largeur de la plage de réception (B), et
c) un moyen d'exploitation (32) est prévu pour déterminer à partir des valeurs enregistrées dans la première et la seconde plage de mémoire (33, 34), les satellites (1-5) situés dans la plage de réception instantanée (B) de l'antenne (C).

8. Récepteur selon la revendication 7,
**caractérisé en ce qu'**
on détermine une variation de la direction de déplacement (D) par des capteurs de roues (15) du véhicule (14), un compas (16) et/ou un capteur inertiel.

9. Récepteur selon la revendication 7 ou 8,
**caractérisé en ce que**
l'antenne (10) est placée derrière la lunette arrière et/ou la lunette avant (13) du véhicule (14).

10. Récepteur selon l'une des revendications 7 à 9,
**caractérisé en ce que**
l'antenne (10) est cachée sous la plage arrière et/ou le tableau de bord du véhicule (14).

11. Récepteur selon l'une des revendications 7 à 10,
**caractérisé en ce que**
l'appareil de réception (22) est relié électriquement à un appareil de navigation.
